# EUROPEAN PATENT SPECIFICATION

(11) **EP 0 556 466 B1**
(45) Date of publication and mention of the grant of the patent: **07.10.1998**
(21) Application number: 92120762.7
(22) Date of filing: 04.12.1992
(51) Int. Cl.: G11B 7/085

(54) **Optical pickup control system of an optical disc player**
Optisches Abtaststeuerungssystem eines optischen Plattenspielers
Système de commande de tête optique d'un lecteur de disque optique

(30) Priority: 21.02.1992 JP 72293/92
(43) Date of publication of application: 25.08.1993
(73) Proprietor: PIONEER ELECTRONIC CORPORATION, Meguro-ku Tokyo 153 (JP)
(72) Inventor: Yanagawa, Naoharu, c/o Tokorozawa Koujou, Tokorozawa-shi, Saitama-ken (JP)
(74) Representative: Sajda, Wolf E., Dipl.-Phys.

(56) References cited:
- EP-A- 176 185
- GB-A- 2 242 302
- US-A- 4 630 252
- US-A- 5 081 616
- PATENT ABSTRACTS OF JAPAN vol. 11, no. 142 (P-573)9 May 1987 & JP-A-61 278 039 ( TOSHIBA CORP. )
- PATENT ABSTRACTS OF JAPAN vol. 13, no. 377 (P-922)22 August 1989 & JP-A-1 130 325 ( MATSUSHITA ELECTRIC IND. CO. LTD )

## Description

The present invention relates to an optical pickup control system of an optical disc player, and more particularly to a system for controlling a pickup head when reproducing information recorded on an optical disc.

There are optical discs such as a CD including a read only CD and a writable CD-R disc which is used as a ROM. Further, as a writable optical disc having a high recording density, a write once disc and an erasable disc are available. Information is recorded on the disc and reproduced with a laser beam. These discs are different from a CD concerning the material of the recording surface.

For example, the write once disc has a tellurium or bismuth recording surface into which the lasers burn pits for recording. In another type of the write once disks, the lasers are focused on a recording surface coated with a selenium antimony (Sb₂Se₃) thin film, or a tellurium oxide (TeOx) thin film, or a thin film of an organic pigment, in order to change the reflectivity of the light.

An erasable disc has as a recording surface consisting of an amorphous alloy made of rare earth metals such as gallium, terbium, and others. In a magneto-optical recording method, the recording surface of the disc is initially magnetized to form a magnetic field in a direction perpendicular to the surface. The laser heats a predetermined area of the disc to elevate the temperature above the Curie temperature, which is about 150 °C, thereby reversing the direction of the magnetic field. In order to read the recorded information, laser light is irradiated on the recording surface so that a polarized wave front rotates slightly as a result of the Kerr effect. Thus only the polarized wave deflected by the rotation is read by a photodetector, thereby enabling a user to read the information.

In a write once disc and an erasable disc, an interchange sector or a TOC area is provided for recording information representing a table of contents (TOC) of the recorded information. When reproducing the information on the disc, a pickup head reads the interchange sector or the TOC area to know the position of an unrecorded area. Thus, useless reading of an unrecorded area on the disc can be avoided.

However, in such a disc, since it is necessary to provide a space for the interchange sector or the TOC area, the space for recording the information is reduced decreasing the amount of recording data, which means a reduction of the recording capacity of the disc.

Furthermore, if there is an accidental omission in the recorded information, the pickup head may blindly run without control.

The United States Patent US-A 5,081,616 discloses a positioning controller adapted to judge whether or not information is recorded at a particular position on the disc. The positioning controller moves the recording head to a starting position which is determined as the last recorded position stored in an address memory. Starting from this position, control means determine whether the disc has been recorded sequentially in the inner-to-outer method or in the outer-to-inner recording method.

The United States Patent US-A 4,630,252 discloses a control apparatus for an optical disc player for locating blank tracks on the disc comprising the features recited in the preamble of claim 1. A search unit detects the level of light intensity reflected from the recording medium or alternatively a RF signal detection circuit detects a RF signal component. When the reflected light intensity exceeds a predetermined value, it is determined that the track at this location is not recorded.

An object of the present invention is to provide an improved disc player, by which the position of the unrecorded area of the disc can be reliably located regardless of the type of disc and by which the recording capacity of the disc can be increased by eliminating the recording space required for a table of contents.

According to the present invention an optical disc player is provided as defined in the single Claim 1. The optical disk player comprises a discriminating device for determining the type of disc. A memory is provided which stores reference values with respect to reflected light for distinguishing between recorded and unrecorded areas for each type of disc. An output signal from detector means indicating the amount of reflected light from the disc is compared with the appropriate reference value to determine the unrecorded area of the disc.

Other objects of this invention will become apparent from the following description of a preferred embodiment with reference to the accompanying drawings.

### BRIEF DESCRIPTION OF DRAWINGS

- Fig. 1: shows schematically an optical pickup control system according to an embodiment of the present invention;
- Fig. 2: is a diagram showing another arrangement not belonging to the invention; and
- Fig. 3: is a flowchart showing the operation of the arrangement of Fig 2.

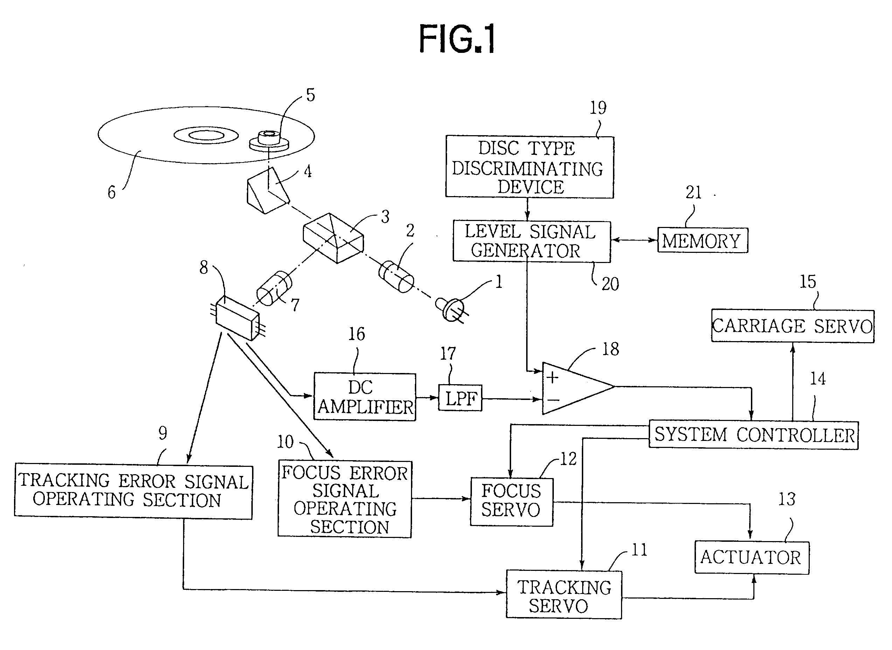

Referring to Fig. 1 showing an embodiment according to the present invention, a laser beam emitted from a semiconductor laser device 1 is made parallel through a collimator lens 2, passes through a beam splitter 3, and is fed to a prism 4. The laser beam is reflected on the prism 4 to an optical disc 6 and focused thereon by an objective 5.

The reflected beam from the optical disc 6 is reflected on the prism 4 to the beam splitter 3 where the path of the beam is changed in a perpendicular direction, and the beam is supplied to a condenser 7. The beam is focused on a photodetector 8 on which divided photo sensors are provided.

The photodetector 8 detects a tracking error signal and a focus error signal in accordance with the spots of the beam, and applies detected tracking error and focus error signals to a tracking error signal operating section 9 and a focus error signal operating section 10, respectively. The operating sections 9 and 10 calculate a tracking error and a focus error, and apply the tracking error and the focus error to a tracking servo 11 and a focus servo 12, respectively. The tracking servo 11 and the focus servo 12 apply actuating signals to an actuator 13. The actuator 13 actuates the objective 5 and operates until any deviations are compensated and a proper focussing is achieved such that the errors, calculated at the operating sections 9 and 10, become zero.

A system controller 14 is provided for controlling the tracking servo 11, the focus servo 12, and a carriage servo 15. The carriage servo 15 is operatively connected to an actuator of a carriage of an optical pickup head for moving the head in the radial direction of the disc 6.

The photodetector 8 further detects the reflectivity of the reflected light and applies a reflection signal to a DC amplifier 16. The DC amplifier 16 produces a DC level signal in proportion to the reflectivity, which is supplied to an inverting input terminal of a comparator 18 through a low pass filter LPF 17.

The optical system further comprises a discriminating device 19 where the type of the disk such as CD, CD-R, write once disc, or erasable disc is discriminated based on an identification code labeled on the disc. A memory 21 is provided which is connected to a level signal generator 20 and which contains reference values for discriminating between a recorded area and an unrecorded area for every type of disc. The reflectivity of the reflected light from a recorded area is larger than that of an unrecorded area, so that the recorded area and the unrecorded area of a loaded disc can be determined in accordance with the reflectivity. Each of the reference values stored in the memory 21 corresponds to a threshold between the reflectivities.

A disc type signal is supplied from the discriminating device 19 to the level signal generator 20. The level signal generator 20 derives the reference value for the loaded disc from the memory 21 in accordance with a type signal from the discriminating device 19.

The level signal generator 20 produces a reference DC level signal depending on the reference value, which signal is supplied to the non-inverting input terminal of the comparator 18. The comparator 18 compares the DC level signal from the DC amplifier 16 with the reference DC level signal from the level signal generator 20. If the output signal of the comparator 18 becomes a positive value, this means that the pickup head has reached the unrecorded area of the disc, and the system controller 14 operates to stop the operations of the tracking servo 11, focus servo 12, and carriage servo 15 in response to the positive signal.

Next, the operation of the optical system is described. When an optical disc 6 has been set in the player, the disc type discriminating device 19 detects the type of the disc 6. The pickup head starts reproducing the information on the disc 6. The light reflected from the disc 6 is detected by the photodetector 8. The DC amplifier 16 produces a DC level signal corresponding to the reflectivity of the reflected light which is applied to the comparator 18 through the LPF 17.

On the other hand, the tracking error signal and the focus error signal are obtained by the photodetector 8. The servos 11, 12 and 15 operate so that the error signals may become zero, respectively.

The comparator 18 compares the DC level signal from the DC amplifier 18 with the reference DC level signal from the level signal generator 20. When the pickup head has reached the unrecorded area of the disc 6, the comparator 18 applies a positive signal to the system controller 14. The system controller 14 controls the components connected thereto in order to immediately stop operations of the servos 11, 12 and 15.

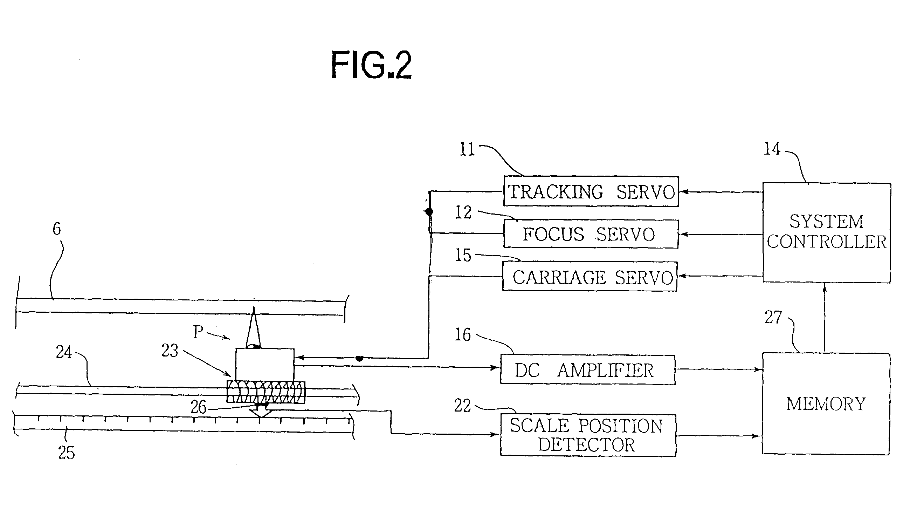

Fig. 2 shows an arrangement of an optical pickup control system, which however is not part of the present invention.

The optical pickup of the arrangement comprises an optical pickup head P supported on a carriage 23, and a guide rail 24 on which the carriage 23 is slidably mounted. Thus, the pickup head P is movable in the radial direction of the disc 6. A scale 25 is provided adjacent and parallel to the guide rail 24 for indicating the radial position of the pickup head P. A magnetic sensor 26 is provided on the underside of the carriage 23 for detecting the position of the pickup head P from the change of a magnetic field. The magnetic sensor 26 produces a position signal which is supplied to a scale position detector 22. The detector 22 detects the position of the pickup head P on the scale 25 in the radial direction of the disc and the detected position is stored in a memory 27.

Instead of the magnetic sensor 26, other sensors such as a photo-sensor may be used. The position is detected in accordance with modulation of light.

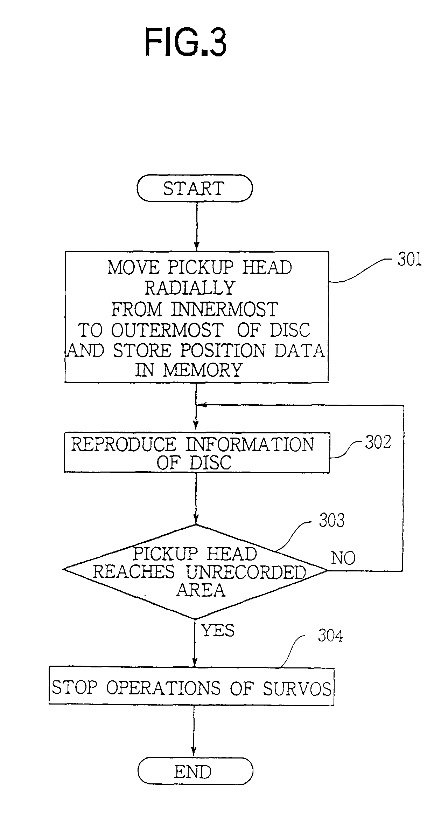

The operation of the system also not belonging to the present invention will be described with reference to the flowchart of Fig. 3.

When the optical disc 6 has been set in the reproducing position of the player, the system controller 14 produces a control signal which is applied to the carriage servo 15. The carriage servo 15 is operated to move the carriage 23 together with the pickup head P in the radial direction of the disc 6 from the innermost position to the outermost position thereof.

During the radial movement, the focus servo 12 is controlled in accordance with a control signal from the system controller 14, while the tracking servo 12 is caused to be inoperative. The scale position detector 22 detects the position of the pickup head P based on the position signal from the magnetic sensor 26.

During the radial movement of the pickup head P with the focus operation, when the pickup head P moves from the recorded area into the unrecorded area of the disc 6, the reflectivity of the reflected light changes, which causes the output of the pickup head P to change.

The change of the output is applied to the memory 27 through the DC amplifier 16.

On the other hand, the scale position detector 22 applies the position signal at the change of the output to the memory 27, which is stored in the memory as a position data of the unrecorded area (step 301).

The carriage 23 is returned to the innermost position of the disc in accordance with the operation of the carriage servo 15 operated by the control signal from the system controller 14. The pickup head P starts reproducing the information recorded on the disc 6 (step 302). It is determined whether the pickup head has reached the unrecorded are or not (step 303). If so, the system controller 14 controls the components connected thereto in order to stop the operation of the carriage servo 15 as well as the tracking servo 11 and the focus servo 12 (step 304).

Alternatively, when the pickup head P has reached the unrecorded area, the pickup head may be returned to the recorded area. In another modification, only the tracking servo 11 is turned off and the unrecorded area is indicated for recording information in the unrecorded area.

## Claims

1. An optical disc player comprising an optical pickup (1 - 7) for reproducing information recorded on an optical disc (6) and a control system including:
detector means (16) for producing an output signal indicative of the reflectivity of the disc (6) at the respective position of the pickup (1 - 7);
determining means (18) for determining whether the pickup (1 - 7) has reached an unrecorded area of the disc based on said output signal and a reference value, and for producing a stop signal;
means (11, 12, 15) responsive to the stop signal for stopping radial movement of the pickup,
characterized in that
a disc-type discriminating device (19) is provided for determining the type of disc;
a memory (21) is provided for storing reference values for distinguishing between a recorded area and an unrecorded area for each type of disc (6);
a level signal generator (20) is connected to said memory (21) for producing a reference signal on the basis of the reference value for the respective disc (6);
said determining means comprise a comparator (18) which compares the output signal from said detector means (16) with the reference signal from said level signal generator (20), wherein said stop signal is produced when the unrecorded area is reached.

## Patentansprüche

1. Bildplattenspieler mit einem optischen Aufnehmer (1-7) zum Wiedergeben von Information, die auf einer Bildplatte (6) aufgezeichnet ist, und mit einem Steuersystem, das folgendes aufweist:
- eine Detektoreinrichtung zum Erzeugen eines Ausgangssignals, welches das Reflexionsvermögen der Platte an der jeweiligen Position des Aufnehmers (1-7) anzeigt;
- eine Bestimmungseinrichtung (18) zum Bestimmen, ob der Aufnehmer (1-7) einen unbespielten Bereich der Platte erreicht hat, und zwar auf der Basis des Ausgangssignals und eines Bezugswerts, sowie zum Erzeugen eines Stoppsignals;
- eine auf das Stoppsignal ansprechende Einrichtung zum Stoppen der Radialbewegung des Aufnehmers,
dadurch gekennzeichnet,
- daß eine Plattentyp-Unterscheidungseinrichtung (19) vorgesehen ist, um den Typ der Platte zu bestimmen;
- daß ein Speicher (21) zum Speichern von Bezugswerten vorgesehen ist, um zwischen einem bespielten Bereich und einem unbespielten Bereich für jeden Typ von Platte (6) zu unterscheiden;
- daß ein Pegelsignalgenerator (20) mit dem Speicher (21) verbunden ist, um ein Bezugssignal auf der Basis des Bezugswerts für die jeweilige Platte (6) zu erzeugen;
- wobei die Bestimmungseinrichtung einen Komparator (18) aufweist, der das Ausgangssignal von der Detektoreinrichtung (16) mit dem Bezugssignal von dem Pegelsignalgenerator (20) vergleicht, wobei das Stoppsignal erzeugt wird, wenn der unbespielte Bereich erreicht ist.

## Revendications

1. Lecteur de disque optique comprenant une tête optique (1-7) pour reproduire l'information enregistrée sur le disque optique (6) et un système de contrôle comprenant :
des moyens de détection (16) qui produisent un signal de sortie reflétant la réflectivité du disque (6) à la position respective de la tête (1-7);
des moyens de détermination (18) pour déterminer si la tête (1-7) a atteint une zone non-enregistrée du disque sur la base du signal de sortie et d'une valeur de référence, et pour produire un signal d'arrêt ;
des moyens (11,12,15) qui, en réponse au signal d'arrêt, arrêtent le mouvement radial de la tête,
caractérisé en ce qu'il comprend
un dispositif de discrimination du type de disque (19) pour déterminer le type de disque ;
une mémoire (21) pour stocker des valeurs de référence afin de distinguer entre une zone enregistrée et une zone non-enregistrée pour chaque de type de disque (6) ;
un générateur de signaux de niveau (20) connecté à la mémoire (21) qui produit un signal de référence sur la base de la valeur de référence du disque respectif (6) ;
les moyens de détermination comprenant un comparateur (18) qui compare le signal de sortie provenant des moyens de détection (16) au signal de référence du générateur de signaux de niveau (20), afin que le signal d'arrêt soit produit quand la zone non-enregistrée est atteinte.
